# EUROPEAN PATENT APPLICATION

(11) **EP 3 165 338 A1**
(43) Date of publication of application: **10.05.2017**
(21) Application number: 16191689.5
(22) Date of filing: 30.09.2016
(51) Int. Cl.: B27B 5/29

(54) **MITRE SAW WITH PIVOT JOINT**

(30) Priority: 06.11.2015 GB 201519661
(71) Applicant: Black & Decker Inc., New Britain, CT 06053 (US)
(72) Inventor: Mortaro, Matteo, 06055 Marsciano (IT); Ginocchini, Lucio, 06132 San Sisto (IT); Bettaccchini, Marcello, 06073 Ellera di Corciano (IT)
(74) Representative: Bell, Ian Stephen

(57) **Abstract**

A saw pivot joint comprising: a cup shaped section (206) having an open end; a cap (224) rotatably mounted on the open end of the cup shape section (206) to form a sealed enclosed space (208) within the cup shaped section (206) and cap (224); a spring (204) located inside of the sealed enclosed space (208) and connected between the cup shaped section (206) and the cap (224) and which applies a rotational biasing force between the cup shaped section (206) and the cap (224) to urge relative rotation movement between the two.

## Description

The present invention relates to a saw with a pivot joint.

US5720096 discloses a typical chop saw.

A chop saw comprises a base. A motor unit is attached to one end of an arm which is pivotally mounted at the other end to a rear edge of the base via a pivot joint. The motor unit comprises an electric motor which rotationally drives a circular saw blade mounted on a spindle which projects from the motor unit. The motor unit is biased to an upper position by a spring within the pivot joint. The motor unit can be pivoted downwards towards the base by an operator grasping a handle attached to the motor unit and urging it downwards against the biasing force of the spring. The motor is activated by the operator using a switch mounted on the handle, the motor being typically powered by a mains electricity supply. The work piece to be cut is placed on the base against a fence located towards the rear of the base. The work piece may be clamped against the fence using an adjustable clamp. Such clamps are attached to the base. Guards, attached to the motor unit, may surround part or all of the blade. A guard actuation mechanism may be utilized in order to retract the guards when the motor unit is pivoted downwardly. When the motor is activated and a work piece is secured on the base, the motor unit is pivoted downwards towards the base by an operator to perform a chop cut on the work piece.

Other types of saw incorporate a pivot joint to enable the saws have a chopping function and perform chop cuts, for example, a sliding compound mitre saw. Such saws also require a pivot joint to enable the saw to perform chop cuts.. EP2689880 discloses an example of such a saw and which has a pivot joint to enable it to perform chop cuts.

One problem with using chop saws or saws with a chopping function is that they generate a lot dust and debris during the cutting process. In existing designs of pivot joints used on such saws, the build-up of dust and debris in and around the pivot joint can interfere with the operation of the pivot joint. It is therefore intended to provide an improved design of pivot joint.

Accordingly, there is provided a saw in accordance with claim 1.

An embodiment of the present invention will now be described with reference to accompanying drawings of which:
Figure 1 shows a perspective view of a mitre saw;
Figure 2 shows an exploded view of the pivot joint of the mitre saw from a first perspective;
Figure 3 shows an exploded view of the pivot joint from a second perspective;
Figure 4 shows an exploded view of the spring and cup shaped section; and
Figure 5 shows a schematic diagram of a cross sectional view of the pivot joint.

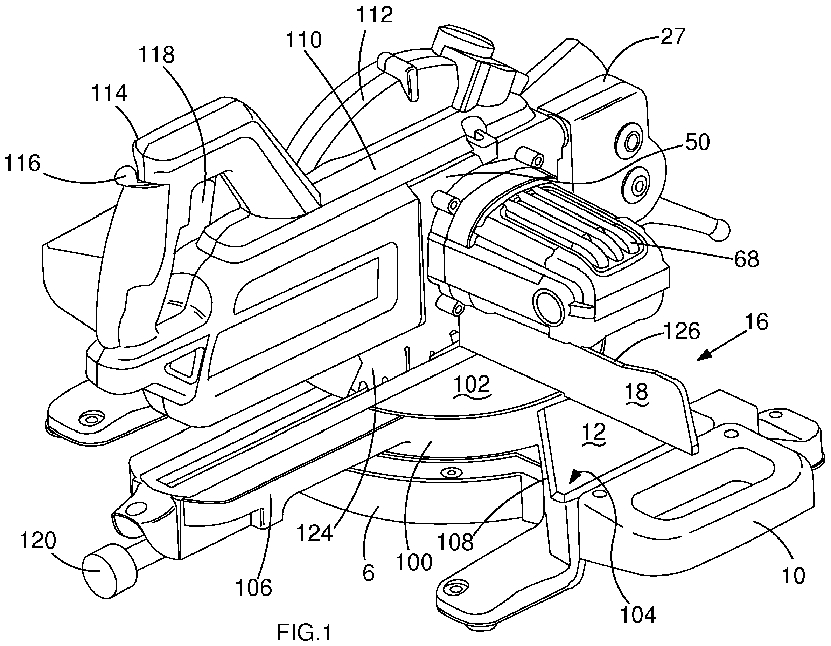

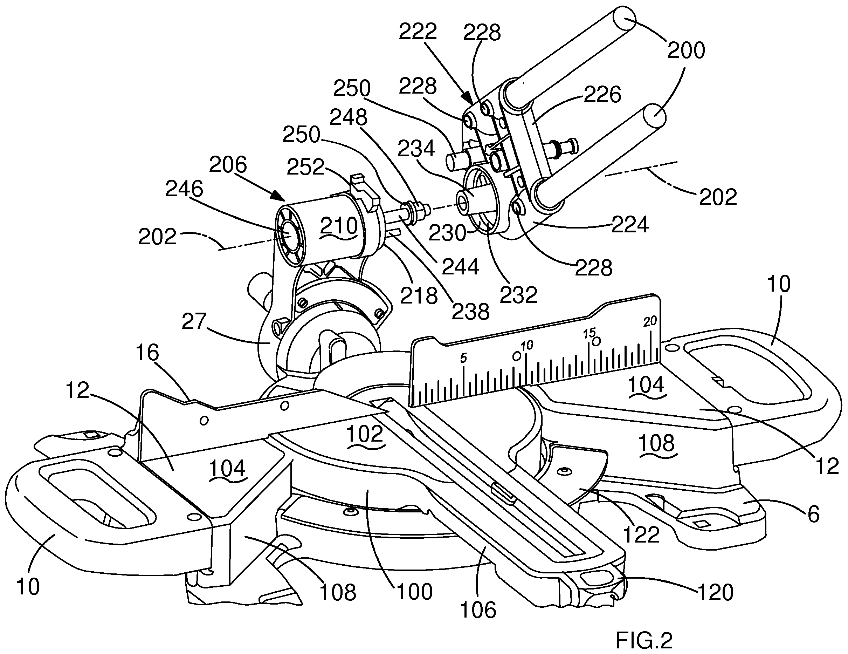

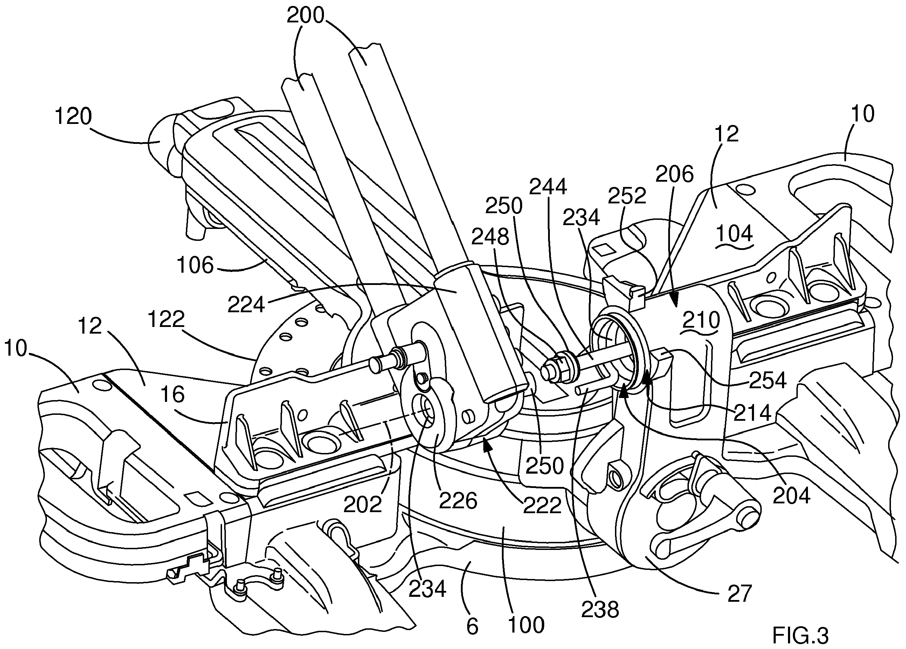

Referring to Figure 1, the mitre saw comprises a base structure 6, 100 comprising a base 6 and a rotatable table 100. The base 6 has two platforms 12 formed symmetrically on either side of the base 6. Rotatably mounted on the base 6 between the two platforms 12 is the rotatable table 100, the top surface 102 of which lies flush with the top surfaces 104 of the two platforms 12. The combined surfaces 102, 104 of the platforms 12 and rotatable table 100 form a work surface. An extension arm 106 is rigidly attached to the rotatable table 100 which extends forward in well-known manner. The rotatable table 100 and extension arm 106 can pivot about a vertical axis through a range of angular positions, the angular movement being restricted by the extension arm 106 engaging with one or other of the sides 108 of the platforms 12. A locking lever 120 can be used to lock the rotatable table 100 and extension arm 106 in desired angular positions. A scale 122 (shown in Figures 2 to 4) is attached to the base 6 to indicate the angular position of the extension arm 106. Carrying handles 10 are attached to the sides of the base 6.

Pivotally mounted on the rear of the rotatable table 100 is a mount 27 to form a bevel joint. The mount 27 can pivot about a horizontal axis relative to the rotatable table 100 to enable the saw to perform bevel cuts. Two guide rods 200 are pivotally attached to the mount 27 via pivot joint which is described in more detail below. Slideably mounted on the two guide rods 200 is a cutting unit 50 which comprises a motor housing 68 in which is mounted an electric motor (not shown), guide rod support housing 110 in which are slideably mounted the two guide rods 200, and a blade guard 112 which surrounds a cutting blade 124 which is mounted on an output spindle (not shown) of the motor. The pivot joint enables the two rods 200 and the cutting unit 50 to pivot about an axis 202 relative to the mount 27 to enable the two rods 200 and the cutting unit 50 to pivot away from or towards the rotatable table 100 and extension arm 106. This enables the saw to perform chop cuts. A spring 204, which forms part of the pivot joint, biases the mount 27 and guide rods to their highest position. A handle 114 is attached to the front of the cutting unit 50 by which a user moves the cutting unit 50 towards or away from the rotatable table 100 and extension arm 106. The mount 27 automatically locks in its uppermost pivotal position by a latch mechanism (not shown). A pivotal lever 116 is mounted on the handle 114 by which an operator can release the latch mechanism. A switch 118 is also mounted on the handle 114, the depression of which activates the electric motor.

Rigidly attached on top of the two platforms 12 of the base 6 at the rear of the platforms 12 is a fixed fence 16. The fence 16 extends across the rotatable table 100 but does not interfere with its rotational movement.

The pivot joint will now be described in more detail with reference to Figures 2 to 5.

The mount 27, which is manufactured from aluminium, comprises a curved wall 210 sealed at one end by an end wall 212 to form a cup shaped section 206 enclosing a tubular passage 208 of uniform circular cross section. Formed around the open end cup shaped section 206 are two walls 216, 218 to form a groove 214. An aperture 220 is formed through the centre of the end wall 212.

Attached to the end of the two guide rods 200 is a base 222 which holds the two guide rods 200 in position. The base 222 comprises two metal clam shells 224, 226 which are clamped around the end of the guide rods 200 and secured to each other and the guide rods using bolts 228.

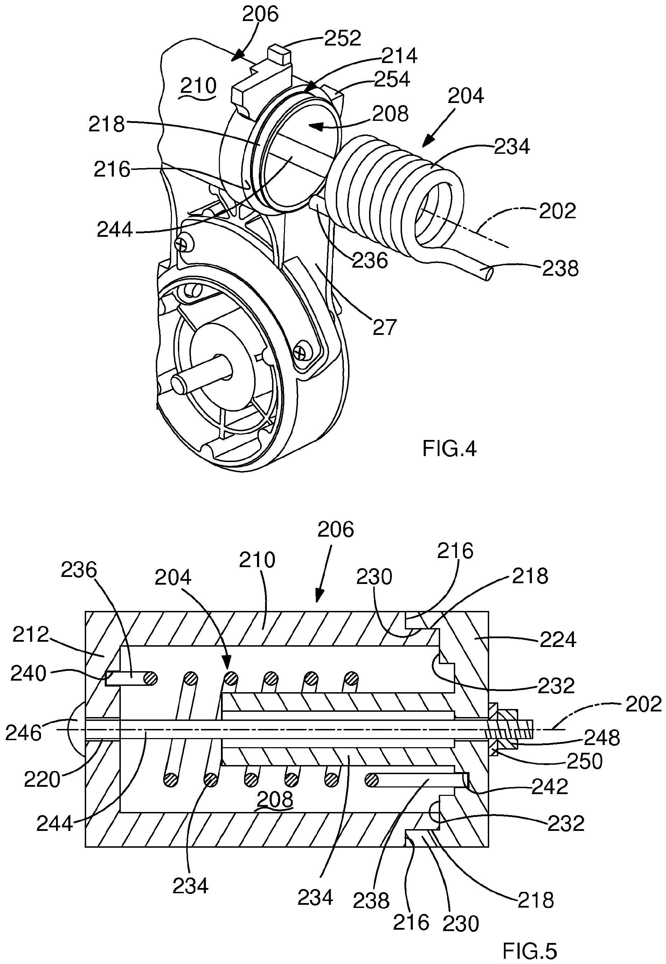

One of the clam shells 224 comprises a circular wall 230 which connects to a circular base 232 formed on the side of the clam shell 224. The size and dimensions of the circular wall 230 are such that it is capable of mating with the groove 214 of the cup shaped section 206 as best seen in Figure 5. When the circular wall 230 is mated with the groove 214 of the cup shaped section 206, the end of the cup shape section 206 abuts against circular base 232.

Extending from the clam shell 224 at the centre of the circular wall 230 and in parallel to the circular wall 230 is an elongate tube 234. When the circular wall 230 is mated with the groove 214 of the cup shaped section 206, the elongate tube 234 extends into the tubular passage 208 as best seen in Figure 5.

The pivot joint comprises the spring 204 which has a central coiled section 234 and two straight ends 236, 238.

When the pivot joint assembled, the circular wall 230 is mated with the groove 214 of the cup shaped section 206. The spring 204 is located inside of the tubular passage 208 with the coiled section surrounding the elongate tube 234. One of the straight ends 236 locates within a recess 240 formed in the end wall 212 of the cup shaped section 206 to attach it to the cup shaped section 206. The other straight end 238 locates in a second recess 242 formed in the clam shell 224 inside of the circular base 232 to attach it to the clam shell 224. A bolt 244 is passed through the aperture 220 in the end wall 212 and through the elongate tube 234. The head 246 of the bolt 244 locates against the outside of the end wall 212. A nut 248 and a washer 250 are screwed on the free end the bolt 244 and abut against the end of the elongate tube as best seen in Figure 5. The bolt 244 secures the cup shaped section 206 to the circular wall 230 with the circular wall 230 mated with the groove 214 of the cup shaped section 206. When the bolt 244 secures the cup shaped section to the circular wall 230, the clam shell 224 in combination with the cup shaped section 206 form a sealed enclosed space 208 in which the spring 204 is located. The longitudinal axis of the bolt 244 is co-axial with the axis 202 of rotation.

The base 222 can pivot on the mount 27 about axis 202 by the circular wall 230 rotating around the groove 214 whilst remaining mated to it. As the base 222 pivots on the mount 27, the cup shape section 206 and/or the circular wall 230 rotates around the bolt 244. The base 222 is pivotally supported on the mount 27 by the engagement of circular wall 230 and the groove 214. As the circular wall 230 rotates within the groove 214, one straight end 236 of the spring 204 rotates relative to the other end 238, storing a spring force in the coiled section 234. The spring 204 applies a biasing force between the cup shaped section 206 and the clam shell 224. The spring 204 is arranged to urge the two guide rods 200 to urge them to point upwardly and move the cutting unit 50 to its highest position. The angular movement of the base 222 on the mount 27 is limited by a projection 250 on the base 222 travelling between two end stops 252, 254 as the base 222 pivots on the mount 27. The spring 204 remains under tension regardless of the relative angular positions of the base 222 and the mount 27.

Whilst the present invention has been described in relation to a sliding compound mitre saw, it will be appreciated that it is applicable to any saw where a pivot joint is required to enable the saw to perform chop cuts.

## Claims

1. A saw pivot joint comprising:
a cup shaped section (206) having an open end;
a cap (224) rotatably mounted on the open end of the cup shape section (206) to form a sealed enclosed space (208) within the cup shaped section (206) and cap (224);
a spring (204) located inside of the sealed enclosed space (208) and connected between the cup shaped section (206) and the cap (224) and which applies a rotational biasing force between the cup shaped section (206) and the cap (224) to urge relative rotation movement between the two.

2. A saw pivot joint as claimed in claim 1 wherein relative rotation between the cup shaped section (206) and the cap (224) increases or decreases the amount of biasing force applied by the spring (204) between the cup shaped section (206) and the cap (224).

3. A saw pivot joint as claimed in either of claims 1 or 2 wherein the spring (204) always remains under tension regardless of the relative angular positions of the cup shaped section (206) and cap (224).

4. A saw pivot joint as claimed in any of the previous claims wherein the cup shape section comprises a curved wall (210) sealed at one end with an end wall (212) to form a to form a tubular passage (208) which forms at least part of sealed enclosed space.

5. A saw pivot joint as claimed in any of the previous claims wherein there is a circular groove (214) formed around the open end of the cup shaped section (206) and wherein the cap (224) comprises a circular wall (230) which, when the cap (224) is rotatably mounted on the open end of the cup shape section (206), locates in and mates with the groove (214), the circular wall (230) sliding within the groove (214) when the cap rotates relative to the cup shaped section.

6. A saw pivot joint as claimed in claim 5 wherein the cap is rotatably mounted on the cup shaped section by the circular wall being located in and mated with the groove.

7. A saw pivot joint as claimed in of the previous claims wherein the spring (204) is a helical spring comprising a coiled central section (234) having two ends (236, 238), one end being connected to the cup shaped section and the other end being connected to the cap.

8. A saw pivot joint as claimed in any of the previous claims wherein the cap is retained on the cup shaped section by a bolt (244) which passes through the two to secure them together.

9. A saw pivot joint as claimed in claim 8 wherein the cup shaped section and/or the cap rotates around the bolt as the cap rotates on the cup shaped section.

10. A saw pivot joint as claim in either of claims 8 or 9 when dependent on claim 7 wherein the cap comprises an elongate tube (234) which projects into the sealed enclosed space (208), the coiled central section (234) of the spring encircling the elongate tube (234) and the bolt (244) passing through the elongate tube (234).

11. A saw pivot joint as claimed in any of the previous claims wherein range of rotational movement between the cup shaped section and cap is limited by a projection (250) mounted on one of the cup shaped section or the cap being located between two stops (252, 254) mounted on the other of the cup shaped section or the cap.

12. A saw for performing chop cuts comprising:
a base forming a first part;
a cutting unit forming a second part,
wherein the cutting unit is pivotally mounted on the base via a pivot joint according to any one of claims 1 to 11 to enable the cutting unit to pivot towards or away from the base to perform chop cuts;
wherein the cup shaped section of the pivot joint is connected to one of the parts and the cap is connected to the other part;
wherein the pivot joint is arranged so that the spring biases the cup shaped section to rotate relative the cap to move the cutting unit way from the base.
